# EUROPEAN PATENT SPECIFICATION

(11) **EP 3 804 094 B1**
(45) Date of publication and mention of the grant of the patent: **06.08.2025**
(21) Application number: 18752875.7
(22) Date of filing: 07.06.2018
(51) Int. Cl.: H02K 1/32, H02K 9/08

(54) **ROTOR FOR AN ELECTRICAL MACHINE COMPRISING AIR COOLING ELEMENTS AND ELECTRICAL MACHINE COMPRISING SAID ROTOR**
ROTOR FÜR EINE ELEKTRISCHE MASCHINE MIT LUFTKÜHLELEMENTEN UND ELEKTRISCHE MASCHINE MIT BESAGTEM ROTOR
ROTOR POUR UNE MACHINE ÉLECTRIQUE COMPRENANT DES ÉLÉMENTS DE REFROIDISSEMENT À L'AIR ET MACHINE ÉLECTRIQUE COMPRENANT LEDIT ROTOR

(43) Date of publication of application: 14.04.2021
(73) Proprietor: Mavel edt S.p.A., 11026 Pont Saint Martin (AO) (IT)
(72) Inventor: CHIONO, Denny, 11026 Pont Saint Martin (AO) (IT); BETTONI, Davide, 11026 Pont Saint Martin (AO) (IT); BORELLO, Fabio, 11026 Pont Saint Martin (AO) (IT)
(74) Representative: Garavelli, Paolo
(86) International application number: PCT/IT2018/000083
(87) International publication number: WO 2019/234771

(56) References cited:
- EP-A1- 2 993 767
- EP-A2- 1 614 205
- EP-A2- 1 926 196
- EP-A2- 2 372 881
- CN-A- 101 764 468
- DE-A1- 102016 101 495
- JP-A- 2010 178 532
- JP-U- S5 453 608
- US-A1- 2014 152 154
- US-A1- 2016 079 820

## Description

The present invention refers to a rotor for an electrical machine according to claim 1 comprising air cooling elements, and to an electrical machine comprising said rotor.

In particular, the invention refers to the air cooling of an electrical machine with internal magnets, more in particular a synchronous reluctance electrical machine of the type with permanent magnets.

An electrical machine typically comprises a fixed parts, the stator, and a mobile part, the rotor, arranged coaxially one inside the other. Typically, the rotor is placed inside the stator, which comprises electric oils adapted to generate a magnetic field, which allows rotating the rotor. The rotor typically comprises a body composed of a pack of sheets and placed on a rotation shaft. In the electrical motors with permanent magnets, the sheets comprise seats for the permanent magnets.

In the electrical machines, and in particular in high-performance electrical motors with permanent magnets, it is necessary to reduce the temperatures which are reached in the rotor and in the magnets themselves, to avoid the loss of magnetization and the consequent performance drop.

For example, if magnets are too hot, the magnetic flux is less intense, which implies a loss of torque and therefore a worsening of the electrical machine performances.

The different electromagnetic components of an electrical machine, as well as some insulating materials used in the parts of the electrical machine, are sensitive to heating produced by the operation and their cooling is mandatory to dissipate heat in order to preserve a good efficiency of the machine, to extend its life and to limit its maintenance.

Patent application WO2018069030 of the Applicant is known, and discloses an electrical machine which integrates a cooling system comprising two fans assembled fixed on the rotor shaft, next to the two ends of the rotor, each fan facing a flange, said fans being adapted to create an air flow to dissipate heat.

Advantageously, each flange comprises wings adapted to direct the air flow created by each internal fan radially towards the heads of the stator coils, along a direction parallel to the rotor axis at the level of the coil heads.

These known electrical motors have the problem that they do not allow obtaining a good cooling of the rotor, in particular of its internal part. Applications relating to the cooling of the internal part of the rotor are disclosed in EP1614205A2, EP2372881A2, DE102016101495A1 and US2014152154A1.

Object of the present invention is solving this problem, by providing a rotor for an electrical machine comprising air cooling elements, and an electrical machine comprising said rotor, which allow improving the cooling of the rotor.

The above and other objects and advantages of the invention, as will result from the following description, are obtained by a rotor for an electrical machine comprising air cooling elements, and an electrical machine comprising said rotor, as claimed in the independent claims.

Preferred embodiments and non trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:

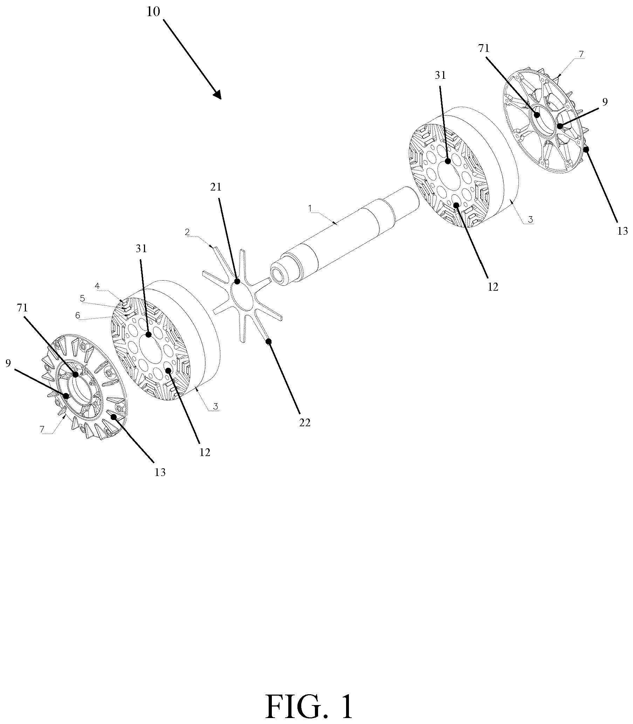

- Figure 1 shows an exploded view of a rotor for an electrical machine according to the invention;

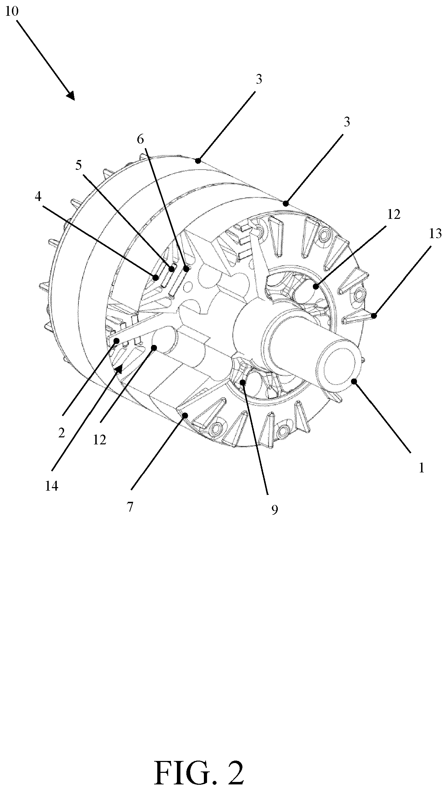

- Figure 2 shows a perspective cut-away view of a rotor for an electrical machine according to the invention; and

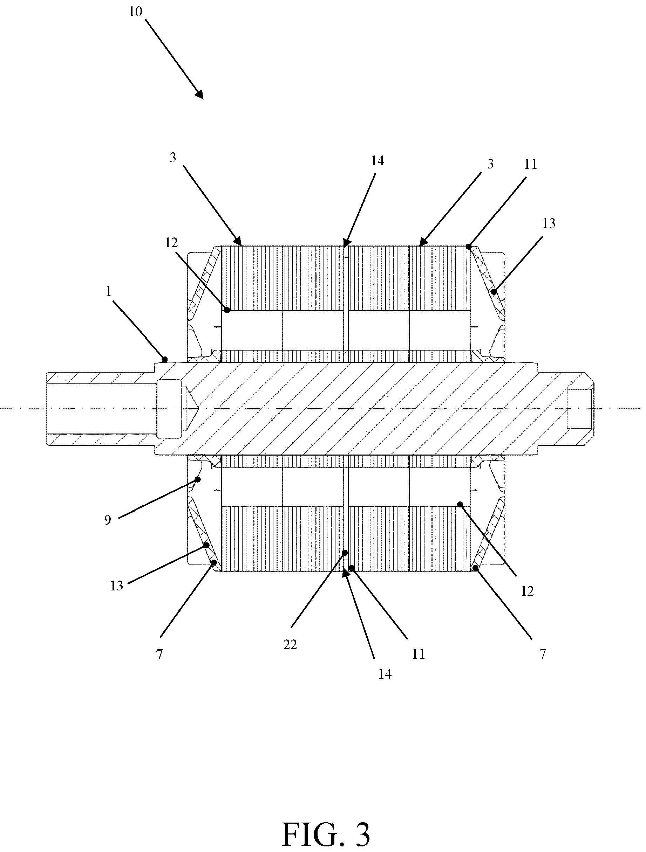

- Figure 3 shows a side sectional view of a rotor for an electrical machine according to the invention.

With reference to the Figures, the electrical machine of the invention comprises: a stator; a rotor 10 comprising at least two lamellar packs 3 mutually separated by a separation zone 14 and fastened to a rotation shaft 1 assembled rotating inside the stator, each lamellar pack 3 comprising at least one opening configured to allow the passage of an air flow coming from outside the rotor 10 towards inside the rotor 10; the opening is configured to allow the passage of the air flow coming from outside the rotor 10 of the separating zone 14 between the two lamellar packs 3.

According to the invention, the lamellar packs 3 each comprise a plurality of holes 12 and are separated by a central spacer 2, integral with the rotation shaft 1 and interposed between the lamellar packs 3, said central spacer 2 being shaped with arms and configured tc direct an air flow from the hole 12, obtained along the lamellar packs 3, through the separating zone 14 between the two lamellar packs 3 towards the external circumference of said lamellar packs 3; preferably, the electrical machine of the invention comprises a first and a second centrifugal fan 7, assembled fixed on the rotation shaft 1 next to a first and a second end of the rotor 10, and comprising internal arms 9 shaped to direct the air flow through the holes 12 obtained along the lamellar packs 3, and external wings 13 configured to direct the air flow towards the heads of the stator coils.

Each lamellar pack 3 is composed of a plurality of sheets 11, each sheet 11 comprising a central hole 31, inside which the shaft 1 is fastened, a plurality of seats 3, 4, 5 adapted to house permanent magnets and a plurality of holes 12, obtained in the part of each sheet 11 included between the central hole 31 and the seats 3, 4, 5, and adjacent to the rotation shaft 1, preferably said holes 12 being mutually at the same distance; said sheets 11 are overlapped so that the respective holes 12 are mutually overlapped to form openings of the lamellar packs 3, which allow the passage of the air flow coming from outside the rotor 10, preferably from the internal arms 9 of the centrifugal fan 7, towards inside the rotor 10, towards the central spacer 2.

The central spacer 2 integral with the rotation shaft 1 and interposed between the lamellar packs 3 is shaped with arms 22 placed next to the spaces between the holes 12 obtained along the lamellar packs 3 and comprises a central hole 21 inside which the rotation shaft 1 is fastened.

Preferably, each centrifugal fan 7 comprises: a plurality of internal arms 9, placed in the part of the centrifugal fan 7 adjacent to the rotation shaft 1 and placed next to the spaces between the holes 12 obtained along the lamellar packs 3; a plurality of external wings 13 placed next to the external circumference of the centrifugal fan 7; a central hole 71 inside which the rotation shaft 1 is fastened.

When operating, the cooling of the rotor 10 is obtained by means of air circulation inside the holes 12 of the lamellar packs 3, which when flowing removes heat from the heated zones and gives it to the external walls of the rotor 10, which are forcedly cooled.

Air is sucked by the central spacer 2, by its arms 22, through the holes 12 obtained on the lamellar packs 3 of the rotor 10, and is pushed towards the external circumference of the rotor 10 through the separating zone 14 between the lamellar packs 3, in the spaces included between the arms 22 of the central spacer 2.

The air circulation in the holes 12 of the lamellar packs 3 is further enabled by the internal shaped arms 9 of the centrifugal fan 7, while the external wings 13 create an external air flow for cooling the stator.

Advantageously, the rotor 10 of the invention, due to the internal air circulation inside the rotor 10, allows reducing the temperatures reached in the rotor and in the magnets, to avoid losing magnetization and the consequent performance drop of the electrical machine.

## Claims

1. Rotor (10) for electrical machine comprising at least two lamellar packs (3) fastened to a rotation shaft (1) configured to be assembled inside a stator of the electrical machine, wherein the two lamellar packs (3) are separated by a separating zone (14), and in that each lamellar pack (3) comprises at least one opening configured to allow the passage of an air flow, coming from outside the rotor (10), towards inside the rotor (10) and towards the separating zone (14) between the two lamellar packs (3), wherein the lamellar packs (3) are composed of a plurality of overlapped sheets (11), each sheet (11) comprising a plurality of holes (12), and wherein the holes (12) of the sheets (11) are mutually overlapped to form the at least one opening of the lamellar packs (3), which allows the passage of the air flow coming from outside the rotor (10) towards inside the rotor (10) and towards the separating zone (14) between the two lamellar packs (3), wherein the rotor comprises a central spacer (2) integral with the rotation shaft (1) and interposed between the lamellar packs (3), **characterised in that** said central spacer (2) is shaped with arms (22) placed next to the spaces between the holes (12) obtained along the lamellar packs (3), the arms (22) next to the spaces being thereby arranged between the holes (12) of the lamellar packs (3) in a circumferential direction, said central spacer (2) being configured to direct an air flow, sucked by the central spacer (2), by its arms (22), through the holes (12), obtained along the lamellar packs (3) of the rotor (10), air being pushed towards the external circumference of said rotor (1) through the separating zone (14) between the lamellar packs (3), in the spaces included between the arms (22) of the central spacer (2).

2. Rotor (10) for electrical machine according to claim 1, **characterized in that** the sheets (11) are mutually overlapped so that their respective holes (12) are overlapped to form the openings of the lamellar packs (3).

3. Rotor (10) for electrical machine according to any one of the previous claims, **characterized in that** it comprises a first and a second centrifugal fan (7), assembled fixed on the rotation shaft (1) next to a first and a second end of the rotor (10) and comprising internal arms (9) shaped to direct the air flow through said at least one opening obtained along the lamellar packs (3) and external wings (13) configured to direct the air flow towards the stator.

4. Rotor (10) for electrical machine according to any one of claims 2 to 3, **characterized in that** each sheet (11) comprises a central hole (31), inside which the shaft (1) is fastened, a plurality of seats (3, 4, 5) adapted to house permanent magnets, and **in that** the holes (12) are obtained in the part of each sheet (11) included between the central hole (31) and the seats (3, 4, 5) and adjacent to the rotation shaft (1).

5. Rotor (10) for electrical machine according to any one the previous of claims 3 to 4, **characterized in that** the internal arms (9) are placed in the part of the centrifugal fan (7) adjacent to the rotation shaft (1) and are placed next to the spaces between the holes (12), and **in that** the external wings (13) are placed next to the external circumference of the centrifugal fan (7).

6. Electrical machine comprising a stator and a rotor (10) according to any one of the previous claims fastened to a rotation shaft (1) assembled rotating inside the stator.

## Patentansprüche

1. Rotor (10) für eine elektrische Maschine, umfassend mindestens zwei Lamellenpakete (3), die an einer Rotationswelle (1) befestigt sind, welche zur Montage in einem Stator der elektrischen Maschine konfiguriert ist, wobei die beiden Lamellenpakete (3) durch eine Trennzone (14) getrennt sind und wobei jedes Lamellenpaket (3) mindestens eine Öffnung (12) aufweist, welche den Durchgang eines von der Außenseite des Rotors (10) kommenden Luftstroms in Richtung des Inneren des Rotors (10) und zur Trennzone (14) zwischen den beiden Lamellenpaketen (3) ermöglicht, wobei die Lamellenpakete (3) aus einer Vielzahl überlappender Bleche (11) bestehen, wobei jedes Blech (11) eine Vielzahl von Löchern (12) aufweist und wobei die Löcher (12) der Bleche (11) einander überlappen, um mindestens eine Öffnung in den Lamellenpaketen (3) zu bilden, welche den Durchgang des von der Außenseite des Rotors (10) kommenden Luftstroms in Richtung des Inneren des Rotors (10) ermöglicht und in Richtung des Trennbereichs (14) zwischen den beiden Lamellenpaketen (3), wobei der Rotor ein zentrales Distanzstück (2) umfasst, das fest mit der Drehwelle (1) verbunden und zwischen den Lamellenpaketen (3) angeordnet ist, **dadurch gekennzeichnet, dass** das zentrale Distanzstück (2) Arme (22) aufweist, die entsprechend den Zwischenräumen zwischen den Löchern (12) entlang der Lamellenpakete (3) positioniert sind, wobei die Arme (22) in der Nähe der Zwischenräume somit in Umfangsrichtung zwischen den Löchern (12) der Lamellenpakete (3) angeordnet sind, und das zentrale Distanzstück (2) so konfiguriert ist, dass es einen vom zentralen Distanzstück (2) an seinen Armen (22) angesaugten Luftstrom durch die Löcher (12) entlang der Lamellenpakete (3) des Rotors (10) leitet, wobei die Luft durch den Trennbereich (14) zwischen den Lamellenpaketen (3) in den zwischen den Armen (22) des zentralen Distanzstücks (2) eingeschlossenen Zwischenräumen zum Außenumfang des Rotors (1) gedrückt wird.

2. Rotor (10) für eine elektrische Maschine nach Anspruch 1, **dadurch gekennzeichnet, dass** die Bleche (11) so übereinander angeordnet sind, dass die jeweiligen Löcher (12) übereinander liegen und die Öffnungen der Lamellenpakete (3) bilden.

3. Rotor (10) für eine elektrische Maschine nach einem der vorhergehenden Ansprüche, **dadurch gekennzeichnet, dass** er einen ersten und einen zweiten Radiallüfter (7) umfasst, die an einem ersten und einem zweiten Ende des Rotors (10) fest auf der Drehwelle (1) montiert sind und innere Arme (9) umfassen, die so geformt sind, dass sie den Luftstrom durch die mindestens eine Öffnung leiten, die entlang der Lamellenpakete (3) ausgebildet ist, sowie äußere Rippen (13), die so konfiguriert sind, dass sie den Luftstrom in Richtung des Stators leiten.

4. Rotor (10) für eine elektrische Maschine nach einem der Ansprüche 2 bis 3, **dadurch gekennzeichnet, dass** jedes Blech (11) ein zentrales Loch (31) aufweist, in dem die Welle (1) befestigt ist, sowie mehrere Sitze (3, 4, 5), die zur Aufnahme von Permanentmagneten geeignet sind, und dass die Löcher (12) in dem Teil jedes Blechs (11) zwischen dem zentralen Loch (31) und den Sitzen (3, 4, 5) und angrenzend an die Rotationswelle (1) ausgebildet sind.

5. Rotor (10) für eine elektrische Maschine nach einem der vorhergehenden Ansprüche 3 bis 4, **dadurch gekennzeichnet, dass** sich die inneren Arme (9) in dem Teil des Radiallüfters (7) neben der Drehwelle (1) befinden und in Übereinstimmung mit den Zwischenräumen der Löcher (12) positioniert sind, und dass sich die äußeren Rippen (13) in Übereinstimmung mit dem Außenumfang des Radiallüfters (7) befinden.

6. Elektrische Maschine, die einen Stator und einen Rotor (10) gemäß einem der vorhergehenden Ansprüche umfasst, der an einer Rotationswelle (1) befestigt ist, die drehbar im Inneren des Stators montiert ist.

## Revendications

1. Rotor (10) pour machine électrique comprenant au moins deux paquets de lamellaires (3) fixés à un arbre de rotation (1) et destinés à être montés à l'intérieur du stator de la machine électrique, les deux paquets de lamellaires (3) sont séparés par une zone de séparation (14), chaque paquet de lamellaires (3) comprend au moins une ouverture (12) conçue pour permettre le passage d'un flux d'air provenant de l'extérieur du rotor (10) vers l'intérieur du rotor (10) et vers la zone de séparation (14) entre les deux paquets de lamellaires (3), les paquets de lamellaires (3) sont formés de plusieurs tôles superposées (11), chaque tôle (11) comprenant plusieurs trous (12), les trous (12) des tôles (11) se chevauchent pour former au moins une ouverture dans les paquets de lamellaires (3) permettant le passage du flux d'air provenant de l'extérieur du rotor (10) vers l'intérieur et vers la zone de séparation (14) entre les deux paquets lamellaires (3), où le rotor comprend une entretoise centrale (2) solidaire de l'arbre de rotation (1) et interposée entre les paquets lamellaires (3), **caractérisée en ce que** ladite entretoise centrale (2) est formée avec des bras (22) positionnés en correspondance avec les espaces entre les trous (12) obtenus le long des paquets lamellaires (3), les bras (22) à proximité des espaces étant ainsi disposés entre les trous (12) des paquets lamellaires (3) dans une direction circonférentielle, ladite entretoise centrale (2) étant configurée pour diriger un flux d'air, aspiré par l'entretoise centrale (2) depuis ses bras (22), à travers les trous (12), obtenus le long des paquets lamellaires (3) du rotor (10), l'air étant poussé vers la circonférence externe dudit rotor (1) à travers la zone de séparation (14) entre les paquets lamellaires (3), dans les espaces compris entre les bras (22) de l'entretoise centrale (2).

2. Rotor (10) pour machine électrique selon la revendication 1, **caractérisé en ce que** les tôles (11) sont superposées les unes aux autres de sorte que les trous respectifs (12) se superposent pour former les ouvertures des paquets de lamellaires (3).

3. Rotor (10) pour machine électrique selon l'une quelconque des revendications précédentes, **caractérisé en ce qu'**il comprend un premier et un deuxième ventilateur centrifuge (7), montés fixement sur l'arbre de rotation (1) à une première et une deuxième extrémité du rotor (10) et comprenant des bras internes (9) conformés pour diriger le flux d'air à travers ladite au moins une ouverture obtenue le long des paquets lamellaires (3) et des ailettes externes (13) configurées pour diriger le flux d'air vers le stator.

4. Rotor (10) pour machine électrique selon l'une quelconque des revendications 2 à 3, **caractérisé en ce que** chaque tôle (11) comprend un trou central (31), à l'intérieur duquel est fixé l'arbre (1), une pluralité de logements (3, 4, 5) aptes à recevoir des aimants permanents et **en ce que** les trous (12) sont obtenus dans la partie de chaque tôle (11) comprise entre le trou central (31) et les logements (3, 4, 5) et adjacente à l'arbre de rotation (1).

5. Rotor (10) pour une machine électrique selon l'une quelconque des revendications 3 à 4 précédentes, **caractérisé en ce que** les bras internes (9) sont situés dans la partie du ventilateur centrifuge (7) adjacente à l'arbre de rotation (1) et sont positionnés en correspondance avec les espaces entre les trous (12), et **en ce que** les ailettes externes (13) sont situées en correspondance avec la circonférence externe du ventilateur centrifuge (7).

6. Machine électrique comprenant un stator et un rotor (10) selon l'une quelconque des revendications précédentes fixé à un arbre de rotation (1) monté rotatif à l'intérieur du stator.
